# EUROPÄISCHE PATENTSCHRIFT

(11) **EP 1 602 835 B1**
(45) Veröffentlichungstag und Bekanntmachung des Hinweises auf die Patenterteilung: **23.10.2013**
(21) Anmeldenummer: 05011297.8
(22) Anmeldetag: 25.05.2005
(51) Int. Cl.: F15B 21/04, F15B 11/042

(54) **Ventil-Anordnung für ein Druckölsystem**
Valve assembly for a hydraulic system
Assemblage de valves pour un système hydraulique

(30) Priorität: 04.06.2004 DE 102004027467
(43) Veröffentlichungstag der Anmeldung: 07.12.2005
(73) Patentinhaber: AUDI AG, 85045 Ingolstadt (DE)
(72) Erfinder: Scholle, Tassilo, 85055 Ingolstadt (DE)
(74) Vertreter: Lehle, Josef

(56) Entgegenhaltungen:
- EP-A- 0 955 474
- DE-B- 1 034 923
- US-A- 2 602 547
- US-A- 2 928 499

## Beschreibung

Die Erfindung betrifft eine Ventil-Anordnung für ein Druckölsystem mit einem Überdruckventil und einem Öldruckregelventil zur Steuerung der Drücke eines von einer Ölpumpe gelieferten Ölstromes.

Solche insbesondere in Verbindung mit den Antriebsaggregaten eines Kraftfahrzeuges benötigten Druckölsysteme werden von einer Ölpumpe gespeist, an deren Druckseite sich in aller Regel ein Ölfilter anschließt, nach dessen Passieren das Drucköl den verschiedenen Verbrauchern des Antriebssystems zugeführt wird. Diese Verbraucher müssen mit einem konstanten Öldruck gespeist werden, was bei variabler Pumpendrehzahl eine Druckbegrenzung durch geeignete Druckregelventile erfordert. Ferner ist zur Sicherheit gegen einen Ausfall der Ölversorgung, z. B. bei verstopften Filter ein Überdruckventil erforderlich, um bei zu geringem Durchfluss durch das Filter und den dadurch ansteigenden Druckanfall im Filter durch Öffnen dieses Überdruckventils den Ölkreislauf sicherzustellen.

Solche Druckölsysteme sind beispielsweise in Vieweg Handbuch Kraftfahrzeugtechnik, 2. Auflage, April 2001, Seite 156 bis 159 sowie in der EP 0 955 474 A2 beschrieben.

Druckölsysteme, die bekanntlich neben der genannten Pumpe und dem genannten Filter einen Kühler, Beölungsvorrichtungen sowie Leitungsverbindungen umfassen, bedürfen der Wartung, was leichte Zugänglichkeit und Austauschbarkeit der einzelnen Bauelemente erfordert. Infolge der nunmehr extrem hohen Baudichte im Motorraum eines Kraftfahrzeuges sind solche Arbeiten problematisch geworden, sodass Bedarf für neue solche Arbeiten erleichternde Bauformen der zu verwendenden Bauelemente also auch der genannten Ventile besteht.

US 2,928,499 A zeigt ein Schmiermittelsystem für eine Brennkraftmaschine, das eine von der Maschine angetriebene Schmiermittelpumpe, eine Schmiermittelabgabeleitung, einen Filter mit einem Einlass und einem Auslass, wobei der Einlass mit der Pumpe und der Auslass mit der Leitung kommuniziert, und ein Entlastungsventil aufweist, das einen Einlass und einen Auslass hat. Der Einlass des Entlastungsventils steht permanent mit dem Einlass des Filters in Verbindung, und der Einlass des Entlastungsventils steht permanent mit dem Auslass des Filters in Verbindung. Das Entlastungsventil bildet eine Umgehungsleitung für den Filter. Eine eingeschränkte Durchgangsleitung, die wenigstens einen der vorgenannten Elemente zugeordnet ist, ist vorgesehen, um eine erste permanente Verbindung zwischen dem wenigstens einen Einlass und dem wenigstens einen Auslass aufzubauen, wodurch die Pumpe die Verbindung mit Schmiermittel versorgen kann, wenn das Schmiermittel währende einer geringen Geschwindigkeit des Motors bei einem geringen Druck zugeführt wird, der ausreichend ist, um das Entlastungsventil zu öffnen und der nicht ausreichend ist, um den Widerstand des Filters zu überwinden.

DE 10 34 923 B offenbart eine Kombinierte Filter- und Druckregeleinrichtung für mit Hoch- und Niederdruckschmieranlage ausgerüstete Brennkraftmaschinen mit einem Filter, welches mittels eines die Einlass und Auslassleitung zum und vom Filter enthalten den Fußteiles an den Motorblock anflanschbar ist, und mit einem Ventil zum Regeln des Öldruckes in der Hochdruckleitung sowie mit einer Abzweigeinrichtung, die Öl aus dem Hochdruck- in das Niederdrucksystem führt, die dadurch gekennzeichnet, dass ein in die mit der Druckseite der Ölpumpe verbundene Hauptleitung einsetzbarer Unterbrecherblock vorgesehen ist, der den von der Ölpumpe kommenden Ölstrom zum Einlasskanal des Filters und den im Auslasskanal vom Filter kommenden Ölstrom in den hinter der Unterbrechungsstelle liegenden Teil der Hauptleitung (Hochdruckschmierleitung) führt, und dass das Öldruckregelventil und die Abzweigeinrichtung im Fußteil derart angeordnet sind, dass der Einlasskanal sowohl über eine verengte Leitung als auch über eine das Öldruckregelventil enthaltende Leitung mit einem Verbindungskanal zur Niederdruckschmierleitung verbunden ist.

Es ist Aufgabe der Erfindung, die für Druckölsysteme der hier in Frage stehenden Art benötigten Ventil-Anordnungen zu vereinfachen.

Dazu weist die erfindungsgemäße Ventil-Anordnung die Merkmale von Anspruch 1 auf.

Das Zusammenfügen von Überdruckventil und Öldruckregelventil zu einem Ventil-Modul bringt eine Reduzierung der Bauteile und damit den Vorteil der Montage- und Wartungserleichterung solcher Öldrucksysteme, da nunmehr nicht mehr einzelne Ventile in einzelne Ventilgehäuse eingesetzt und gewartet werden müssen. Ein weiterer Vorteil ist darin zu sehen, dass die Führung der Anschlussleitungen in vorhandene Raumengen des Motorraumes eines Kraftfahrzeuges ermöglicht, was zu signifikanten Vorteilen bei der Bauraumausnutzung führt.

Die Erfindung ist nachstehend anhand eines in der Zeichnung mehr oder minder schematisch dargestellten Ausführungsbeispiels beschrieben. Es zeigen
Fig. 1 ein Ventil-Modul gemäß der Erfindung mit einem Überdruckventil und einem Öldruckregelventil im Schnitt;
Fig. 2 einen Schnitt gemäß der Linie II - II in Fig. 1 und
Fig. 3 einen Schnitt gemäß der Linie III - III in Fig. 1.

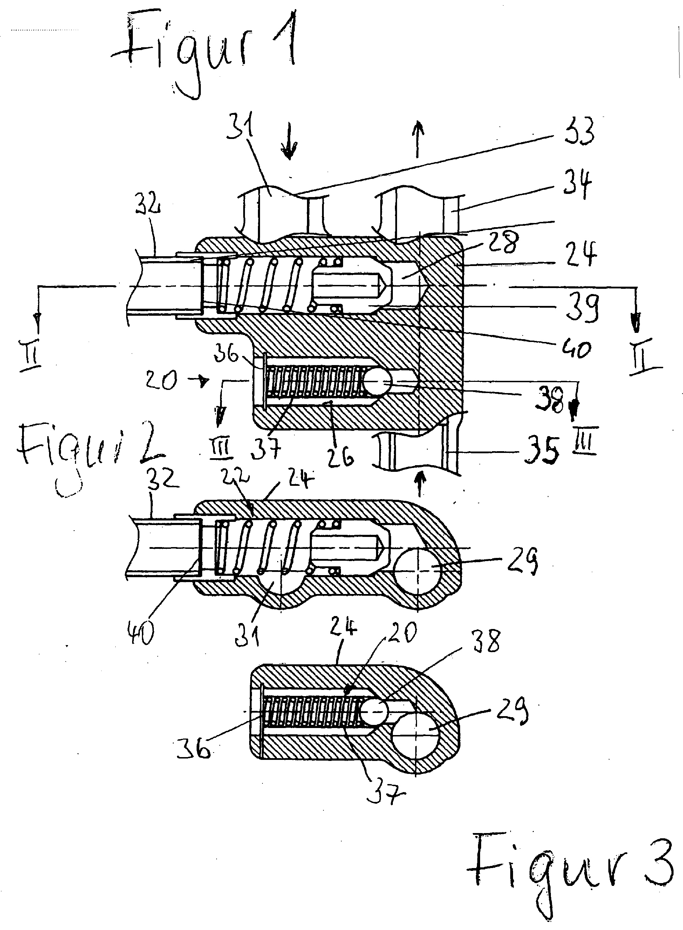

Ein hier nicht dargestellter in einem ebenfalls nicht dargestellten Getriebegehäuse befindlicher Druckölkreislauf für ein Getriebe - z. B. für ein stufenloses Getriebe - umfasst ein Überdruckventil 20 sowie ein Öldruckregelventil 22, die in einem gemeinsamen Ventilgehäuse 24 gemäß der Ausbildung nach Fig. 1 angeordnet sind. Hierzu weist das Ventilgehäuse 24 eine das Überdruckventil 20 aufnehmende Bohrung 26, eine das Öldruckregelventil 22 aufnehmende Bohrung 28 sowie einen rechtwinklig zu den Bohrungen angeordneten Durchgangkanal 29 und eine dazu parallel liegende Kanalbohrung 31 auf.

Wie die Figuren 2 und 3 zeigen kommunizieren die Bohrungen 26 und 28 mit dem Durchgangkanal 29, während die Kanalbohrung 31 nur mit der Bohrung 28 kommuniziert. Der Bohrung 28 ist ein Rohranschluss 32, der Kanalbohrung 31 ist ein Rohranschluss 33, dem. Durchgangkanal 29 sind ein Rohranschluss 34 und dem abgewandten Ende ein Rohranschluss 35 zugeordnet; vgl. Fig. 1.

Das Überdruckventil 20 ist in üblicher Weise aufgebaut und besteht aus einer an einer Scheibe 36 sich abstützenden Feder 39, die auf eine an einer Kegelmantelfläche der Bohrung 26 sich abstützenden Ventilkugel 38 wirkt. Das Öldruckregelventil 22 ist in an sich bekannter Weise als Differenzdruckventil ausgebildet, dessen äußere Kolbenfläche 39 sich an der zugewandten Schließkante der Bohrung 28 abstützt.

Die Rohranschlüsse 33 und 34 bilden den Ein- und Ausgang für einen nicht dargestellten Filter, die Rohranschlüsse 33 und 35 bilden den Ein- und einen Ausgang für das nicht dargestellte Druckölsystem. Das Überdruckventil 20 und das Öldruckregelventil (22) derart aufeinander abgestimmt ausgebildet sind, dass der Öffnungsdruck des Überdruckventils grösser als der Druck des einströmendes Öls und der Öffnungsdruck des Öldruckregelventils kleiner als der Öffnungsdruck des Überstromventils ist. Zwecks zusätzlicher Grobfilterung und Restschmutzreduzierung ist der Öffnung des Rohranschlusses 32 ein Sieb 40 als integraler Bestandteil zugeordnet.

## Patentansprüche

1. Ventil-Anordnung für ein Druckölsystem mit einem Filter und einem Überdruck- und einem Öldruckregelventil zur Steuerung der Arbeitsdrücke eines von einer Pumpe gelieferten Ölstromes, wobei das Überdruckventil (20) und das Öldruckregelventil (22) zwecks Bildung eines Ventil-Moduls in einem gemeinsamen Ventilgehäuse (24) angeordnet sind wobei die das Überdruckventil (20) und das Öldruckregelventil (22) aufnehmenden Bohrungen (26, 28) im Ventilgehäuse (24) parallel zueinander und rechtwinklig zu einem des Ventilgehäuse (24) durchsetzenden, gemeinsamen Durchgangkanal (29) angeordnet sind, mit dem beide Ventile (20, 22) kommunizieren, und eine Kanalbohrung (31), die nur mit der Bohrung (28) des Öldruckregelventils (22) kommuniziert, parallel zu dem Durchgangkanal (29) angeordnet ist, wobeider Bohrung (28) ein Rohranschluss (32) zugeordnet ist, der Kanalbohrung (31) ein Rohranschluss (33) zugeordnet ist und dem Durchgangkanal (29) ein Rohranschluss (34) und dem abgewandten Ende ein Rohranschluss (35) zugeordnet sind, wobei die Rohranschlüsse (33) und (34) den Ein- und Ausgang für den Filter und die Rohranschlüsse (33) und (35) den Ein- und einen Ausgang für das Druckölsystem bilden.

## Claims

1. Valve assembly for a hydraulic system, having a filter and an overpressure valve and an oil pressure regulator valve for controlling the operating pressures of a flow of oil delivered by a pump, the overpressure valve (20) and the oil pressure regulator valve (22) being arranged in a shared valve housing (24) to form a valve module, the bores (26, 28) that accommodate the overpressure valve (20) and the oil pressure regulator valve (22) being arranged in the valve housing (24) parallel to one another and at right angles to a shared feed-through channel (29) which passes through the valve housing (24) and with which both valves (20, 22) communicate, and a channel bore (31) which communicates only with the bore (28) of the oil pressure regulator valve (22) is arranged parallel to the feed-through channel (29), the bore (28) having an associated pipe connection (32), the channel bore (31) having an associated pipe connection (33) and the feed-through channel (29) having an associated pipe connection (34) and the remote end having an associated pipe connection (35), the pipe connections (33) and (34) forming the inlet and outlet for the filter and the pipe connections (33) and (35) forming the inlet and an outlet for the hydraulic system.

## Revendications

1. Ensemble de soupapes pour un système hydraulique avec un filtre et une soupape de surpression ainsi qu'une soupape de réglage de pression d'huile pour commander les pressions de travail d'un flux d'huile délivré par une pompe, dans lequel la soupape de surpression (20) et la soupape de réglage de pression d'huile (22) sont agencées dans un boîtier de soupapes commun (24) en vue de former un module de soupapes, dans lequel les alésages (26, 28) recevant la soupape de surpression (20) et la soupape de réglage de pression d'huile (22) sont ménagés dans le boîtier de soupapes (24) parallèlement l'un à l'autre et perpendiculairement à un canal de passage commun (29) traversant le boîtier de soupapes (24), avec lequel canal les deux soupapes (20, 22) communiquent, et il est ménagé un alésage de canal (31), qui communique uniquement avec l'alésage (28) de la soupape de réglage de pression d'huile (22), parallèlement au canal de passage (29), dans lequel il est affecté à l'alésage (28) un raccord tubulaire (32), il est affecté à l'alésage de canal (31) un raccord tubulaire (33) et il est affecté au canal de passage (29) un raccord tubulaire (34) et à l'extrémité opposée un raccord tubulaire (35), dans lequel les raccords tubulaires (33) et (34) forment l'entrée et la sortie pour le filtre et les raccords tubulaires (33) et (35) forment l'entrée et une sortie pour le système hydraulique.
